(19) Europäisches Patentamt
European Patent Office
Office européen des brevets

(11) Publication number: **0 473 890 A1**

# (12) EUROPEAN PATENT APPLICATION

(21) Application number: **91110023.8**

(22) Date of filing: **19.06.91**

(51) Int. Cl.[5]: **A01N 43/50**, A01N 25/02, //(A01N43/50,25:02)

(30) Priority: **28.08.90 US 574183**

(43) Date of publication of application: **11.03.92 Bulletin 92/11**

(84) Designated Contracting States: **AT BE CH DE DK ES FR GB GR IT LI LU NL SE**

(71) Applicant: **AMERICAN CYANAMID COMPANY**
**1937 West Main Street P.O. Box 60**
**Stamford Connecticut 06904-0060(US)**

(72) Inventor: **Steller, William Steven**
**551 Fernwood Lane**
**Fairless Hills, Pennsylvania 19039(US)**
Inventor: **Peevey, Richard Michael**
**641 Edison Drive**
**East Windsor, New Jersey 08520(US)**

(74) Representative: **Wächtershäuser, Günter, Dr.**
**Tal 29**
**W-8000 München 2(DE)**

## (54) Aqueous herbicidal compositions of 2-(2-imidazolin-2-yl)-pyridines and quinolines.

(57) The present invention relates to stable, ready to use aqueous herbicidal compositions comprising, on a weight basis, about 1.0% to 8.0% of a water soluble salt of an herbicide; about 20% to 40% of a glycol; about 2.0% to 8.0% of a nonionic surfactant or a mixture of nonionic surfactants; up to about 8.0% of a $C_1$ to $C_6$ alcohol; up to about 0.1% of a silicone antifoam; up to about 1.0% of a marker dye and water to total 100.0% which has been buffered with a sufficient amount of acid to have a range of about pH 6 ot pH 8. Especially efficacious are ready to use aqueous herbicidal composistions containing 2-(2-imidazolin-2-yl)-pyridines and quinolines.

EP 0 473 890 A1

Herbicidal compositions are utilized in forestry management to control deciduous plant species in site preparations and understory control. In the business and residential sectors, herbicidal compositions are used to control brush around buildings and parking lots and the transportation industry uses such compositions to control deciduous plant species along roadways and railroad rights-of-way.

Heretofore, control of deciduous plants was achieved by the application of herbicidal formulations containing oils, petroleum distillates and the like which were incorporated to enhance the basal penetration of the herbicide into the bark and tough stem tissue of the deciduous plants. While these formulations may be effective in controlling undesirable deciduous plants, the oils and petroleum distillates used in the formulations may find their way into streams, lakes, ponds, rivers, reservoirs and even aquifers which are sources of drinking water for a vast population. Therefore, what is lacking in the art is a formulation of the 2-(2-imidazolin-2-yl)-pyridines and quinolines free of oils and petroleum distillates.

Advantageously, it has been found that the aqueous herbicidal compositions of the present invention have superior basal penetrating properties and use no penetrating oils or petroleum distillates.

It is therefore an object of the present invention to provide stable, ready to use aqueous herbicidal compositions containing 2-(2-imidazolin-2-yl)-pyridines and quinolines having superior basal penetrating properties without using oils or petroleum distillates.

The present invention relates to stable, ready to use aqueous herbicidal compositions containing 2-(2-imidazolin-2-yl)-pyridines and quinolines. Surprisingly, it has been found that stable aqueous compositions of herbicidal 2-(2-imidazolin-2-yl)-pyridines and quinolines, such as 2-(4-isopropyl-4-methyl-5-oxo-2-imidazolin-2-yl)nicotinic acid, have superior basal penetrating properties and therefore may be useful in the control of deciduous trees.

The present invention relates to stable, ready to use aqueous herbicidal compositions comprising, on a weight basis, about 1.0% to 8.0% of a water soluble salt of an herbicide; about 20% to 40% of a glycol; about 2.0% to 8.0% of a nonionic surfactant or a mixture of nonionic surfactants; up to about 8.0% of a $C_1$ to $C_6$ alcohol; up to about 0.1% of a silicone antifoam; up to about 1.0% of a marker dye and water to total 100.0% which has been buffered with a sufficient amount of acid to have a range of about pH 6 to pH 8.

Compositions of the invention which may be especially efficacious in the control of deciduous plants are those comprising, on a weight basis, about 1.0% to 8.0% of a water soluble salt of a 2-(2-imidazolin-2-yl)-pyridine or quinoline such as isopropylammonium 2-(4-isopropyl-4-methyl-5-oxo-2-imidazolin--2-yl)-nicotinate; about 20% to 40% of a glycol; about 2.0% to 8.0% of a nonionic surfactant or mixture of nonionic surfactants and water to total 100.0% which has been buffered with a sufficient amount of acid to have a range of about pH 6 to pH 8. Additionally, it has been found the addition of a marker dye to the compositions of the present invention in amounts of from about 0.01% to 1.0% on a weight basis enhances the effective use of the compositions by coloring the treated areas. To prevent foaming, a silicone antifoam agent may be added to the aqueous herbicidal compositions in amounts of from about 0.01% to 0.1% on a weight basis. A $C_1$ to $C_6$ alcohol may optionally be added to the compositions of the invention on a weight basis in amounts from about 0.01% to 8.0% and preferably from about 3.0% to 8.0%.

Surfactants suitable for use in the compositions of the invention include nonionic surfactants with polyoxyethylene linear($C_9$ to $C_{15}$) alcohols and polyoxyethylene phenyl ethers such as polyoxyethylene nonylphenyl ethers, polyoxyethylene dinonylphenyl ethers, polyoxyethylene dodecylphenyl ethers, polyoxyethylene octylphenyl ethers and polyoxyethylene tridecylphenyl ethers being preferred.

Glycols suitable for use in the compositions of the invention include ethylene glycol, propylene glycol, diethylene glycol, ethylene glycol monomethyl ether, dipropylene glycol, ethylene glycol monobutyl ether and the like with propylene glycol being preferred. Alcohols suitable for use in the compositions of the invention include methanol, ethanol, n-propanol, isopropanol, n-butanol and the like with isopropanol being preferred.

The pH of the compositions of the invention may be adjusted with a mineral acid or water soluble organic acid to give a range from about pH 6 to pH 8 and preferably from about pH 6.5 to pH 7.5. Preferred acids for use in the compositions of the invention are hydrochloric acid, acetic acid, sulfuric acid, propionic acid and the like with acetic acid being most preferred.

Salts of 2-(2-imidazolin-2-yl)-pyridines and quinolines suitable for use in the compositions of the present invention include water soluble salts such as ammonium, organic ammonium, sodium, potassium and the like with isopropylammonium being preferred.

Preferred stable, ready to use aqueous herbicidal compositions of the present invention are those comprising, on a weight basis, about 1.0% to 8.0% of a water soluble salt of a 2-(2-imidazolin-2-yl)-pyridine or quinoline such as isopropylammonium 2-(4-isopropyl--4-methyl-5-oxo-2-imidazolin-2-yl)nicotinate; about 20% to 40% propylene glycol; about 0.01% to 0.5% of a polyoxyethylene linear($C_9$ to $C_{15}$) alcohol; about 2.5% to 5.0% of a polyoxyethylene phenyl ether; about 3.0% to 8.0% isopropanol; about 0.01% to 0.1% of

a silicone antifoam; about 0.01% to 1.0% of a marker dye and water to total 100.0% which has been buffered with a sufficient amount of acetic acid to have a range from about pH 6 to pH 8.

The free acids of the 2-(2-imidazolin-2-yl)-pyridines and quinolines have the structural formula I:

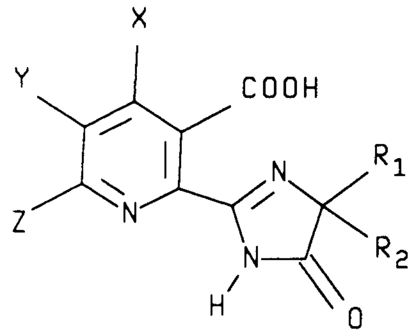

(I)

wherein

| | |
|---|---|
| $R_1$ | is $C_1$ to $C_4$ alkyl; |
| $R_2$ | is $C_1$ to $C_4$ alkyl or $C_3$ to $C_6$ cycloalkyl; and when $R_1$ and $R_2$ are taken together with the carbon to which they are attached they may represent $C_3$ to $C_6$ cycloalkyl optionally substituted with methyl; |
| X | is hydrogen, halogen, hydroxyl or methyl; |
| Y and Z | are each hydrogen, halogen, $C_1$ to $C_6$ alkyl, hydroxyloweralkyl, $C_1$ to $C_6$ alkoxy, $C_1$ to $C_4$ alkylthio, phenoxy, $C_1$ to $C_4$ haloalkyl, nitro, cyano, $C_1$ to $C_4$ alkylamino, diloweralkylamino or $C_1$ to $C_4$ alkysulfonyl group, or phenyl optionally substituted with one $C_1$ to $C_4$ alkyl, $C_1$ to $C_4$ alkoxy or halogen; and, when taken together, Y and Z may form a ring in which YZ are represented by the structure: $--(CH_2)n--$, where n is an integer of 3 or 4; or |

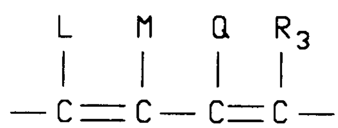,

where L, M, Q and $R_3$ are each hydrogen, halogen, $C_1$ to $C_4$ alkyl, $C_1$ to $C_4$ alkoxy $C_1$ to $C_4$ alkylthio, $C_1$ to $C_4$ alkysulfonyl, $C_1$ to $C_4$ haloalkyl, $NO_2$, CN, phenyl, phenoxy, amino, $C_1$ to $C_4$ alkylamino, diloweralkylamino, chlorophenyl, methylphenyl, or phenoxy substutited with one Cl, $CF_3$, $NO_2$ or $CH_3$ group, with the proviso that only one of L, M, Q or $R_3$ may represent a substituent other than hydrogen, halogen, $C_1$ to $C_4$ alkyl or $C_1$ to $C_4$ alkoxy;

and when $R_1$ and $R_2$ represent different substituents, the optical isomers thereof.

Among the water soluble salts of 2-(2-imidazolin-2-yl)-pyridines and quinolines particularly useful in the compositions of the present invention are isopropylammonium 2-(4-isopropyl-4-methyl-5-oxo-2-imidazolin-2-yl)nicotinate, isopropylammonium 2-(4-isopropyl-4-methyl-5-oxo-2-imidazolin-2-yl)-5-methylnicotinate, ammonium 2-(4-cyclopropyl-4-methyl-5-oxo-2-imidazolin-2-yl)nicotinate, ammonium 5-bromo-2-(4-isopropyl-4-methyl-5-oxo-2-imidazolin-2-yl)nicotinate, and isopropylammonium 2-(4-isopropyl-4-methyl-5-oxo-2-imidazolin-2-yl)-5,6-dimethylnicotinate.

It is recognized that water soluble salts of other herbicides such as phenoxybenzoic acids, pyrazoliums, amino acid deriatives, chlorinated aliphatic acids, benzoic acids and phenoxyalkanoic acids are suitable for use in the compositions of the present invention in amounts from about 1.0% to 30% on a weight basis. Examples of these herbicides are acifluorfen, difenzoquat, glyphosate, 3,6-dichloro-2-methoxybenzoic acid (dicamba), 2,2-dichloropropionic acid (dalapon), 2,4-dichlorophenoxyacetic acid (2,4-D), 2-methyl-4-chlorophenoxybutyric acid (MCPB) and 2,4,5-trichlorophenoxyacetic acid (2,4,5-T).

The present invention provides a method of controlling undesired deciduous plants in which the aqueous herbicidal compositions are applied directly to the bark, foliage or stems of said plants. The

aqueous herbicidal compositions are able to effectively penetrate the bark, foliage and stems of deciduous plants without requiring mixing with oils, petroleum distillates or other penetration enhancers.

A problem which may be associated with some aqueous compositions is physical instability at low temperatures. At low temperatures some aqueous compositions freeze, precipitate solids and/or are not free flowing. However, the preferred compositions of the present invention remain solid and free-flowing to temperatures of about -17°C.

The following examples are provided to further illustrate the compositions of the present invention but are not limitative of the invention described herein.

## EXAMPLE 1

### Absorption of aqueous herbicidal compositions into maple trees

Five maple trees 1 meter tall with a diameter of 2.5cm are each marked off into five centimeter long sections. On each of the five sections, ten 2µl droplets of a $^{14}C$ labeled aqueous herbicidal composition (Table I) is applied. The trees are then placed in a growth chamber (28°/24°C, Day/Night, 13 hours photoperiod) for five days. Upon removal from the chamber, the treated sections of bark are cut from the trees and washed three times in 40 mL of 0.25% DM710/-methanol solution. Only the outside bark is washed in the first two washes. In the third wash, the bark is soaked in the solution. There are a minimum of 7 replicates per composition. The initial amount of radioactivity applied to the trees is determined by applying the five compositions listed in Table I to an excised piece of bark which is immediately washed in the washing solution. The difference in the amount of radioactivity applied to the tree and the amount washed off after five days is used to determine the amount of 2-(2-imidazolin-2-yl)-pyridine or quinoline herbicide absorbed into the tree. The data obtained for the above-described evaluations are reported in Table II.

**TABLE I**

**AQUEOUS HERBICIDAL COMPOSITIONS**

| Composition | % w/w: 2-(4-isopropyl-4-methyl-5-oxo-2-imidazolin-2-yl)nicotinic acid | isopropylamine | propylene glycol | polyoxyethylene linear($C_9$-$C_{15}$) alcohol | polyoxyethylene nonylphenyl ether | isopropanol | acetic acid | water |
|---|---|---|---|---|---|---|---|---|
| 1 | 2.99 | 0.71 | - | - | - | - | 0.01 | 96.29 |
| 2 | 2.99 | 0.71 | 30 | - | 2.5 | 5.0 | 0.01 | 58.79 |
| 3 | 2.99 | 0.71 | 30 | 0.25 | 2.5 | 5.0 | 0.01 | 58.54 |
| 4 | 2.99 | 0.71 | 30 | 0.50 | 2.5 | 5.0 | 0.01 | 58.29 |
| 5 | 2.99 | 0.71 | 30 | 2.5 | 2.5 | 5.0 | 0.01 | 56.29 |

TABLE II

| Absorption of $^{14}C$ labeled aqueous herbicidal compositions | | |
|---|---|---|
| Composition | Replicates | % Absorption |
| 1 | 7 | 5.30 ±4.3 |
| 2 | 7 | 20.4 ±3.7 |
| 3 | 9 | 26.1 ±8.9 |
| 4 | 9 | 22.0 ±7.0 |
| 5 | 9 | 24.6 ±4.8 |

## EXAMPLE 2

### Control of Hardwood Species

An aqueous herbicidal composition is applied to various deciduous tree species that are from about 1 to 3 inches in diameter. The composition is sprayed on the trees from the root collar up to about 12 inches and completely around the stem. The composition employed in the tests comprises on a weight basis 3.25% 2-(4-isopropyl-4-methyl-5-oxo-2-imidazolin-2-yl)nicotinic acid; 0.8% isopropylamine; 30.0% propylene glycol; 2.5% of a polyoxyethylene linear($C_9$-$C_{15}$) alcohol; 2.5% of a polyoxyethylene nonylphenyl ether; 0.01% of a silicone antifoam; 5.0% isopropanol; 0.10% glacial acetic acid; 0.5% of a marker dye and water to total to 100.0%. The control of hardwood species is based upon the defoliation of the deciduous trees and the suppression of leaf out after defoliation.

The data obtained for the above-described evaluations are reported in Table III.

TABLE III

| CONTROL OF HARDWOOD SPECIES | | | | | |
|---|---|---|---|---|---|
| Location | Species | Days | % Control | Days | % Control |
| Tennessee | Hickory | 100 | 10 | 400 | 100 |
| Tennessee | Dogwood | 100 | 10 | 400 | 100 |
| Tennessee | Red Oak | 100 | 10 | 400 | 100 |
| Tennessee | Blackgum | 100 | 20 | 400 | 100 |
| Kentucky | Sassafras | 200 | 95 | 500 | 100 |
| Kentucky | Red Maple | 200 | 90 | 500 | 100 |
| Kentucky | Persimmon | 200 | 50 | 500 | 100 |
| Kentucky | Sumac | 200 | 25 | 500 | 100 |
| Washington | Willow | 100 | 40 | 350 | 100 |
| Washington | Bigleaf Maple | 100 | 98 | 350 | 100 |
| Washington | Red Alder | 100 | 98 | 350 | 100 |
| New Mexico | Saltcedar | 100 | 65 | 350 | 99 |
| Florida | Laurel Oak | 100 | 10 | 300 | 100 |
| Florida | Water Oak | 100 | 10 | 300 | 100 |
| Florida | Turkey Oak | 100 | 10 | 300 | 95 |
| Florida | Live Oak | 100 | 15 | 300 | 97 |
| Florida | Black Cherry | 100 | 70 | 300 | 100 |
| Connecticut | Red Maple | 100 | 100 | 300 | 100 |
| Connecticut | Black Cherry | 100 | 80 | 300 | 100 |
| Connecticut | Sassafras | 100 | 100 | 300 | 100 |
| Connecticut | Red Oak | 100 | 10 | 300 | 100 |
| Connecticut | White Oak | 100 | 10 | 300 | 100 |
| Illinois | Black Locust | 100 | 40 | 300 | 11 |
| Illinois | Autumn Olive | 100 | 50 | 300 | 92 |
| Illinois | Black Cherry | 100 | 20 | 300 | 97 |

## Claims

**1.** An aqueous herbicidal composition characterized by, on a weight basis, 1.0% to 8.0% of a water soluble salt of an herbicide; 20% to 40% of a glycol; 2.0% to 8.0% of a nonionic surfactant or a mixture of nonionic surfactants; up to 8.0% of a $C_1$ to $C_6$ alcohol; up to 0.1% of a silicone antifoam; up to 1.0% of a marker dye and water to total 100.0% which has been buffered with a sufficient amount of acid to have a range of pH 6 to pH 8.

**2.** The composition according to Claim 1, wherein the herbicide is a 2-(2-imidazolin-2-yl)-pyridine or quinoline having the structure

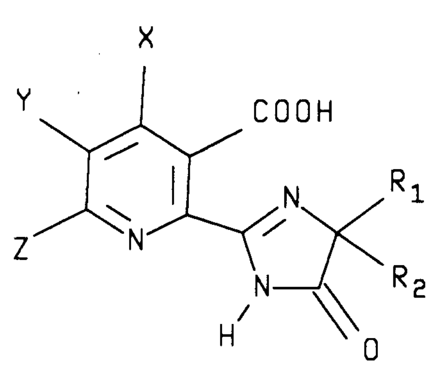

wherein

$R_1$ is $C_1$ to $C_4$ alkyl;

$R_2$ is $C_1$ to $C_4$ alkyl or $C_3$ to $C_6$ cycloalkyl; and when $R_1$ and $R_2$ are taken together with the carbon to which they are attached they may represent $C_3$ to $C_6$ cycloalkyl optionally substituted with methyl;

X is hydrogen, halogen, hydroxyl or methyl;

Y and Z are each hydrogen, halogen, $C_1$ to $C_6$ alkyl, hydroxyloweralkyl, $C_1$ to $C_6$ alkoxy, $C_1$ to $C_4$ alkylthio, phenoxy, $C_1$ to $C_4$ haloalkyl, nitro, cyano, $C_1$ to $C_4$ alkylamino, diloweralkylamino or $C_1$ to $C_4$ alkysulfonyl group, or phenyl optionally substituted with one $C_1$ to $C_4$ alkyl, $C_1$ to $C_4$ alkoxy or halogen; and, when taken together, Y and Z may form a ring in which YZ are represented by the structure: $--(CH_2)_n--$, where n is an integer of 3 or 4; or

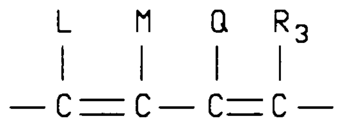,

where L, M, Q and $R_3$ are each hydrogen, halogen, $C_1$ to $C_4$ alkyl, $C_1$ to $C_4$ alkoxy $C_1$ to $C_4$ alkylthio, $C_1$ to $C_4$ alkysulfonyl, $C_1$ to $C_4$ haloalkyl, $NO_2$, CN, phenyl, phenoxy, amino, $C_1$ to $C_4$ alkylamino, diloweralkylamino, chlorophenyl, methylphenyl, or phenoxy substutited with one Cl, $CF_3$, $NO_2$ or $CH_3$ group, with the proviso that only one of L, M, Q or $R_3$ may represent a substituent other than hydrogen, halogen, $C_1$ to $C_4$ alkyl or $C_1$ to $C_4$ alkoxy;

and when $R_1$ and $R_2$ represent different substituents, the optical isomers thereof.

**3.** The composition according to Claim 2, wherein the $C_1$ to $C_6$ alcohol is methanol, ethanol, isopropanol, n-propanol or n-butanol; the acid used to adjust the pH is acetic acid, sulfuric acid, hydrochloric acid or propionic acid and the glycol is ethylene glycol, propylene glycol, diethylene glycol, ethylene glycol monomethyl ether or propylene glycol monomethyl ether.

**4.** The composition according to Claim 3, wherein the alcohol is isopropanol, the acid is acetic acid and the glycol is propylene glycol.

**5.** The composition according to Claim 3, wherein the nonionic surfactant or mixture of nonionic surfactants is a polyoxyethylene linear($C_9$ to $C_{15}$)alcohol and/or a polyoxyethylene phenyl ether.

**6.** The composition according to Claim 5, wherein the mixture of nonionic surfactants is 0.01% to 0.5% of a polyoxyethylene linear ($C_9$ to $C_{15}$)alcohol and 2.5% to 5.0% of a polyoxyethylene phenyl ether.

**7.** The composition according to Claim 5, having a pH in a range of pH 6.5 to pH 7.5.

**8.** The composition according to Claim 5, wherein the 2-(2-imidazolin-2-yl)-pyridine or quinoline salt is isopropylammonoim 2-(4-isopropyl-4-methyl-5-oxo-2-imidazolin-2-yl)nicotinate, isopropylammonium 2-(4-isopropyl-4-methyl-5-oxo-2-imidazolin-2-yl)-5-methylnicotinate or isopropylammonium 2-(4-isopropyl-4-methyl-5-oxo-2-imidazolin-2-yl)-5,6-dimethylnicotinate.

**9.** The composition according to Claim 8, wherein the 2-(2-imidazolin-2-yl)-pyridine or quinoline salt is isopropylammonium 2-(4-isopropyl-4-methyl-5-oxo-2-imidazolin-2-yl)nicotinate.

**10.** A method for controlling undesired deciduous plants characterized by administering to the plants an effective amount of an aqueous herbicidal composition characterized by, on a weight basis, 1.0% to 8.0% of a water soluble salt of an herbicide; 20% to 40% of a glycol; 2.0% to 8.0% of a nonionic surfactant or a mixture of nonionic surfactants; up to 8.0% of a $C_1$ to $C_6$ alcohol; up to 0.1% of a silicone antifoam; up to 1.0% of a marker dye and water to total 100.0% which has been buffered with a sufficient amount of acid to have a range of PH 6 to pH 8.

11. The method according to Claim 10, wherein the herbicide is a 2-(2-imidazolin-2-yl)-pyridine or quinoline having the structure

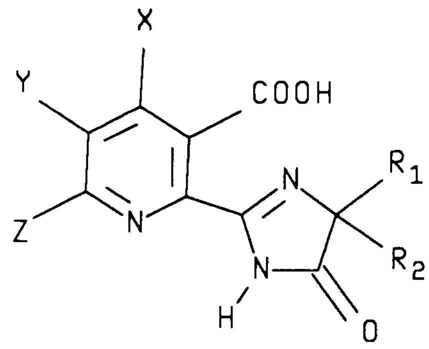

wherein

| | |
|---|---|
| $R_1$ | is $C_1$ to $C_4$ alkyl; |
| $R_2$ | is $C_1$ to $C_4$ alkyl or $C_3$ to $C_6$ cycloalkyl; and when $R_1$ and $R_2$ are taken together with the carbon to which they are attached they may represent $C_3$ to $C_6$ cycloalkyl optionally substituted with methyl; |
| X | is hydrogen, halogen, hydroxyl or methyl; |
| Y and Z | are each hydrogen, halogen, $C_1$ to $C_6$ alkyl, hydroxyloweralkyl, $C_1$ to $C_6$ alkoxy, $C_1$ to $C_4$ alkylthio, phenoxy, $C_1$ to $C_4$ haloalkyl, nitro, cyano, $C_1$ to $C_4$ alkylamino, diloweralkylamino or $C_1$ to $C_4$ alkysulfonyl group, or phenyl optionally substituted with one $C_1$ to $C_4$ alkyl, $C_1$ to $C_4$ alkoxy or halogen; and, when taken together, Y and Z may form a ring in which YZ are represented by the structure: --$(CH_2)_n$--, where n is an integer of 3 or 4; or |

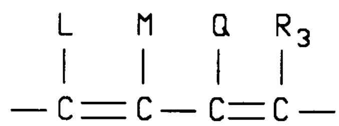
,

where L, M, Q and $R_3$ are each hydrogen, halogen, $C_1$ to $C_4$ alkyl, $C_1$ to $C_4$ alkoxy $C_1$ to $C_4$ alkylthio, $C_1$ to $C_4$ alkysulfonyl, $C_1$ to $C_4$ haloalkyl, $NO_2$, CN, phenyl, phenoxy, amino, $C_1$ to $C_4$ alkylamino, diloweralkylamino, chlorophenyl, methylphenyl, or phenoxy substutited with one Cl, $CF_3$, $NO_2$ or $CH_3$ group, with the proviso that only one of L, M, Q or $R_3$ may represent a substituent other than hydrogen, halogen, $C_1$ to $C_4$ alkyl or $C_1$ to $C_4$ alkoxy;

and when $R_1$ and $R_2$ represent different substituents, the optical isomers thereof.

12. The method according to Claim 11, wherein the $C_1$ to $C_6$ alcohol is methanol, ethanol, isopropanol, n-propanol or n-butanol; the acid used to adjust the pH is acetic acid, sulfuric acid, hydrochloric acid or propionic acid and the glycol is ethylene glycol, propylene glycol, diethylene glycol, ethylene glycol monomethyl ether or propylene glycol monomethyl ether.

13. The method according to Claim 12, wherein the alcohol is isopropanol, the acid is acetic acid and the glycol is propylene glycol.

14. The method according to Claim 12, wherein the nonionic surfactant or mixture of nonionic surfactants is a polyoxyethylene linear($C_9$ to $C_{15}$)alcohol and/or a polyoxyethylene phenyl ether.

15. The method according to Claim 14, wherein the mixture of nonionic surfactants is 0.01% to 0.5% of a polyoxyethylene linear ($C_9$ to $C_{15}$) alcohol and 2.5% to 5.0% of a polyoxyethylene phenyl ether.

**16.** The method according to Claim 14, having a pH in a range of pH 6.5 to pH 7.5.

**17.** The method according to Claim 14, wherein the 2-(2-imidazolin-2-yl)-pyridine or quinoline salt is isopropylammonoim 2-(4-isopropyl-4-methyl-5-oxo-2-imidazolin-2-yl)nicotinate, isopropylammonium 2-(4-isopropyl-4-methyl-5-oxo-2-imidazolin-2-yl)-5-methylnicotinate or isopropylammonium 2-(4-isopropyl-4-methyl-5-oxo-2-imidazolin-2-yl)-5,6-dimethylnicotinate.

**18.** The method according to Claim 17, wherein the 2-(2-imidazolin-2-yl)-pyridine or quinoline salt is isopropylammonium 2-(4-isopropyl-4-methyl-5-oxo-2-imidazolin-2-yl)nicotinate.

European Patent Office

# EUROPEAN SEARCH REPORT

Application Number

**EP 91 11 0023**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 256 414 (AMERICAN CYANAMID COMPANY)<br>– – – | | A 01 N 43/50<br>A 01 N 25/02 //<br>(A 01 N 43/50<br>A 01 N<br>A 01 N 25:02 ) |
| A | WORLD PATENTS INDEX LATEST Section Ch, Week 8331, 28 September 1983 Derwent Publications Ltd., London, GB; Class C, AN 723315<br>& AU-A-8 290 870 (DOW CHEMICAL CO) 16 June 1983<br>* abstract * *<br>– – – | | |
| A | EP-A-0 249 770 (AMERICAN CYANAMID COMPANY)<br>– – – | | |
| P,A | US-A-4 971 630 (J.S.SKAPTASON)<br>– – – – – | | |

| TECHNICAL FIELDS SEARCHED (Int. Cl.5) |
|---|
| A 01 N |

The present search report has been drawn up for all claims

| Place of search | Date of completion of search | Examiner |
|---|---|---|
| The Hague | 05 December 91 | DONOVAN T.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document